Europäisches Patentamt

European Patent Office

Office européen des brevets

(19)

(11) Numéro de publication : **0 093 748 B2**

(12) **NOUVEAU FASCICULE DE BREVET EUROPEEN**

(45) Date de publication du nouveau fascicule du brevet : **11.09.91 Bulletin 91/37**

(51) Int. Cl.$^5$ : **B29C 67/14**

(21) Numéro de dépôt : **82903325.7**

(22) Date de dépôt : **17.11.82**

(86) Numéro de dépôt international :
**PCT/FR82/00192**

(87) Numéro de publication internationale :
**WO 83/01755 26.05.83 Gazette 83/13**

(54) **PROCEDE DE FABRICATION DE PROFILES EN RESINE THERMOPLASTIQUE CHARGEE DE FIBRES, INSTALLATION POUR LA MISE EN OEUVRE ET PROFILES OBTENUS.**

Le dossier contient des informations techniques présentées postérieurement au dépôt de la demande et ne figurant pas dans le présent fascicule.

(30) Priorité : **18.11.81 FR 8121545**

(43) Date de publication de la demande :
**16.11.83 Bulletin 83/46**

(45) Mention de la délivrance du brevet :
**15.10.86 Bulletin 86/42**

(45) Mention de la décision concernant l'opposition :
**11.09.91 Bulletin 91/37**

(84) Etats contractants désignés :
**AT BE CH DE FR GB LI LU NL SE**

(56) Documents cités :
EP-A- 0 027 543
DE-B- 2 043 728
FR-A- 2 031 719
FR-A- 2 031 720
FR-A- 2 085 896
FR-A- 2 140 618
FR-A- 2 411 262
GB-A- 1 334 702
US-A- 2 852 840
US-A- 3 042 956

(56) Documents cités :
US-A- 3 470 051
US-A- 3 586 560
US-A- 3 742 106
US-A- 3 940 464
US-A- 4 037 011
US-A- 4 098 927
US-A- 4 151 031

(73) Titulaire : **SPIE-BATIGNOLLES (société anonyme)**
**Tour Anjou 33, Quai de Dion-Bouton**
**F-92814 Puteaux (FR)**
Titulaire : **COFLEXIP**
**23 Avenue de Neuilly**
**F-75116 Paris (FR)**

(72) Inventeur : **CHABRIER, Gilbert**
**7 Rue Bastienne**
**F-95160 Montmorency (FR)**
Inventeur : **MOINE, Guy**
**65 Rue du Chemin Vert**
**F-95330 Domont (FR)**
Inventeur : **MAURION, Roger**
**16 Rue de Cormeilles**
**F-95370 Montigny Les Cormeilles (FR)**
Inventeur : **SZABO, René**
**34 Rue du Président Wilson**
**F-78230 Le Pecq (FR)**

(74) Mandataire : **Bouju, André et al**
**Cabinet André Bouju B.P. 6250**
**F-75818 Paris Cédex 17 (FR)**

EP 0 093 748 B2

## Description

La présente invention concerne un procédé de fabrication de profilés minces constitués de fibres continues noyées dans une résine thermoplastique, selon le préambule de la revendication 1.

On connaît, par exemple, par le brevet français n° 2 031 719, un procédé pour l'obtention de profilés composés de fibres agglomérées par des résines synthétiques en poudre et destinés principalement à la fabrication de granules à fibres longues.

Ce procédé consiste à séparer l'ensemble des fibres associées entre elles sous la forme de fils ou de mèches, à appliquer sur ces fibres individuelles une résine synthétique sous forme de poudre et à réaliser immédiatement après cette application, la fusion de la résine, puis le formage et le refroidissement du produit.

Les fibres sont séparées les unes des autres par passage de la mèche de fibres dans un venturi parcouru par un fluide à grande vitesse. Les fibres ainsi écartées passent ensuite sous un distributeur de résine synthétique en poudre, puis les fibres ainsi imprégnées traversent une filière chauffée d'où sort un profilé composé de fibres agglomérées dans une résine synthétique.

Ce procédé ne permet pas de contrôler la distribution de la résine à l'intérieur des fibres.

Etant donné que la répartition de la résine entre les fibres ne peut être régulière et que le procédé précité ne permet pas d'obtenir un taux élevé de fibres, ces profilés présentent une résistance à la traction peu élevée et bien inférieure à 100 hbars dans le cas de l'emploi de fibres de verre E.

Le document FR-A-2 085 896 décrit un procédé pour produire des profilés en matière thermoplastique renforcée par des fibres, dans lequel on fait passer une nappe de fibres sur des rouleaux noyés dans un bain de particules de résine qui séparent la nappe en faisceaux de fibres, puis on chauffe la nappe imprégnée de résine et on la fait passer dans une filière.

Ce procédé ne permet pas d'obtenir une répartition homogène de particules de résine dans la nappe de fibres, ni de contrôler avec précision le taux de résine. Les profilés obtenus selon ce procédé présentent ainsi des propriétés mécaniques non reproductibles et le plus souvent médiocres.

Le FR-A-2 031 720 décrit un procédé d'imprégnation de mats de fibres par de la résine sous forme de poudre, dans lequel on secoue le mat pour répartir la résine dans les fibres et l'amener en partie sur la face inférieure et de pulvériser de l'eau pour fixer la résine dans le mat.

Ce procédé est présenté comme un inconvénient dans le document ci-dessus et propose pour y remédier de soumettre la nappe à des charges électrostatiques.

Ce document propose également de former le profilé après sa sortie du four de fusion de la résine par passage entre deux rouleaux de calandrage refroidis.

L'US-A-3 940 464 du même déposant que le FR-A-2 085 896 décrit un procédé modifié par le fait que la nappe de fibres est imprégnée lors de son passage sur les rouleaux par un excès de particules de résine après quoi la nappe est passée sous des jets d'air qui sont soufflés sur celle-ci par intermittence. Le souffle de ceux-ci dégarnit les couches extérieures de la nappe. Le taux de résine peut ainsi être ajusté.

L'US-A-4 098 927 du même déposant que le FR-A-2 085 896 et l'US-A-3 940 464, décrit un procédé amélioré par le fait que la quantité de résine entraînée par la nappe de fibres est ajustée, avant son entrée dans la chambre de fusion en fonction de la tension appliquée sur la nappe pour éviter la rupture de celle-ci.

La quantité de résine est ajustée en dirigeant sur la nappe un jet d'air dont on fait varier la pression.

Les procédés ci-dessus mettant en oeuvre des jets d'air pour ajuster le taux de résine ne permettent pas d'obtenir une répartition homogène de la résine au sein des fibres car ces jets d'air affectent uniquement les couches extérieures de la nappe de fibres.

Dans le DE-B-2 043 728, il a été proposé de faire vibrer le récipient renfermant la résine d'imprégnation à l'état de lit fluidisé pour éviter la formation de cavités au sein de ce lit. Ce document enseigne cependant d'éviter tout contact avec la nappe, après sa sortie du lit fluidisé pour éviter la chute de particules de résine.

Le but de la présente invention est de fournir un procédé qui permette d'obtenir un profilé dans lequel les particules de résine sont réparties d'une manière uniforme au sein des fibres et dans lequel le taux de résine est ajusté avec précision.

Ce but est atteint par un procédé comprenant l'étape définie dans la partie caractérisante de la revendication 1.

Grâce à ce procédé, il est possible d'obtenir des profilés présentant un taux de fibres d'au moins 50% et de préférence 70% en poids et de forte section, la résistance à la rupture en traction dépassant 100 hbars, dans le cas de l'utilisation de fibres de verre type E.

Ces profilés continus à haute teneur en fibres et hautes performances sont particulièrement adaptés au frettage de corps creux, tubes ou réservoirs comme décrits dans le FR-A-2 491 044 du 26 septembre 1980, au nom de SPIE-BATIGNOLLES.

Selon une version avantageuse de l'invention, après fusion de la résine, on conforme la nappe chargée de résine fondue par laminage entre deux cylindres refroidis. Cette opération permet d'obtenir de meilleurs résultats que le passage de la nappe à travers une filière en raison de la viscosité élevée de ces résines à l'état fondu. Par ailleurs, le refroidissement des cylindres évite l'encrassement par la résine fon-

due qui adhère aux parois dans le cas de filières chauffées.

L'invention vise également une installation de fabrication de profilés minces constitués de fibres continues noyées dans une résine thermoplastique conforme au préambule de la revendication 4.

Suivant l'invention, cette installation est caractérisée par les moyens énoncés dans la partie caractérisante de la revendication 4.

Les fibres peuvent être choisies parmi les suivantes : fibres de verre, d'amiante, de bore, de carbone, de graphite, de kevlar et autres fibres dont le point de ramollissement est sensiblement supérieur à la température de fusion de la résine.

La résine peut être constituée par une poudre de polyamide, de polychlorure de vinyle, de polycarbonate, de polyéthylène ou autre résine thermoplastique ou melange de ces résines.

D'autres particularités et avantages de l'invention apparaîtront encore dans la description ci-après.

Aux dessins annexés, données à titre d'exemples non limitatifs:
- La figure 1 est en schéma montrant l'étape de formation de la nappe de fibres suivie du dispositif de traitement des fibres;
- La figure 2 est un schéma montrant l'étape d'imprégnation de la nappe de fibres par les particules de résine en suspension gazeuse;
- La figure 3 est un schéma montrant le chauffage et le calibrage de la nappe pour l'amener à la forme de profilé mince;
- La figure 4 est un schéma en coupe, à plus grande échelle, du module de calibrage;
- La figure 5 est un schéma montrant l'étape de stokage du profilé sur bobine.

Le principe de construction modulaire adopté pour la réalisation de l'installation décrite ci-après, sans être limitatif, a permis la mise au point séparée des différents modules.

Il est bien évident que sur des bases identiques une installation compacte et automatisée pourrait être conçue. Dans cet exemple d'installation, on retrouve les modules suivants:
A) Constitution de la nappe de fibres parallèles et traitement de la surface des fibres;
B) Imprégnation de la nappe et dosage de la quantité de résine;
C) Chauffage et fusion;
D) Calibrage et refroidissement;
E) Tirage et bobinage.

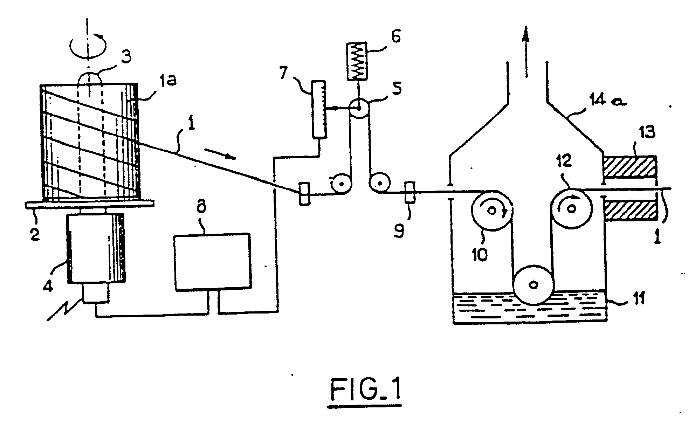

A) Module de formation de la nappe (voir Fig. 1):

Les pelotes ou bobines 1a de roving de verre obtenues par bobinage direct sont déroulées par l'extérieur pour éliminer toute torsion de la mèche dans la nappe 1. Elles sont placées verticalement sur un plateau 2 comportant un mandrin expansible 3 de fixation. Le plateau est entrainé par un moteur à courant continu à vitesse variable 4. La position verticale des bobines permet de limiter l'effet d'un balourd en cas d'ovalisation de la bobine, le poids propre de la bobine intervenant très peu.

A la sortie de la bobine, la nappe de fibres 1 passe sur un système de poulies dont l'une 5 est mobile et liée à un dynamomètre 6. Un curseur 7 relié à la poulie mobile commande une régulation électronique 8 qui permet d'asservir la vitesse du moteur pour maintenir la tension désirée. Un système de sécurité évite l'emballement du moteur en cas de blocage du roving. Chaque bobine composant la nappe est ainsi régulée, ce qui garantit une tension égale et contrôlée de tous les rovings de la nappe.

Ce dispositif permet d'atteindre des vitesses de 90 m/minute.

A la sortie des poulies de tension, chaque roving passe dans un guide-fil 9 et arrive sur un rouleau 10 qui commence à écarter les fibres. Les positions respectives des guides-fils et du rouleau sont réglées pour l'obtention d'une nappe de rovings parallèles suffisamment large pour que les fibres aient la possibilité de s'étaler sur deux épaisseurs maximum.

Cet étalement est obtenu par réglage de la tension de déroulage. Pour une même largeur, cette tension dépend de l'ensimage des fibres, qui varie suivant leur provenance et quelquefois même le lot de fabrication.

A la sortie du rouleau 10, la nappe 1 passe sur un rouleau imprégné de la solution de traitement 11 et remonte en s'essorant sur le rouleau 12. Elle est ensuite séchée par passage entre des panneaux chauffants infra-rouges 13.

Les vapeurs du solvant de la solution de traitement 11 sont aspirées par une hotte 14a et traitées dans une installation non représentée.

Cette opération de réensimage des fibres est nécessaire pour obtenir une bonne adhérence des fibres sur la résine employée car actuellement les rovings disponibles sur le marché sont traités uniquement pour l'imprégnation par des résines thermodurcissables.

Dans l'exemple décrit, la solution de traitement 11, choisie pour l'application d'une résine polyamide, est une solution époxy phénolique en solution à 2 % dans de la méthyl éthyl cétone. On peut également utiliser une solution de silane à 1 % dans du butanol.

B) Imprégnation de la nappe et dosage de la résine

La nappe 1 traitée et séchée pénètre par le rouleau 14 dans un bac 26a à dispersion aqueuse de résine 26. Les particules sensiblement sphéroïdales de résine sont forcés mécaniquement à travers les fibres par passage sur les rouleaux 15, 16 et 17, noyés dans la dispersion de résine, en raison de la tension de la nappe. Le pressage des particules entre les fibres et la paroi des rouleaux 15, 16, 17 améliore la séparation des fibres et les maintient écartées par les particules emprisonnées.

Les rouleaux 15, 16 et 17 permettent ainsi d'imprégner mécaniquement la nappe de fibres par la résine. Cette imprégnation peut être contrôlée en modifiant les paramètres suivants:

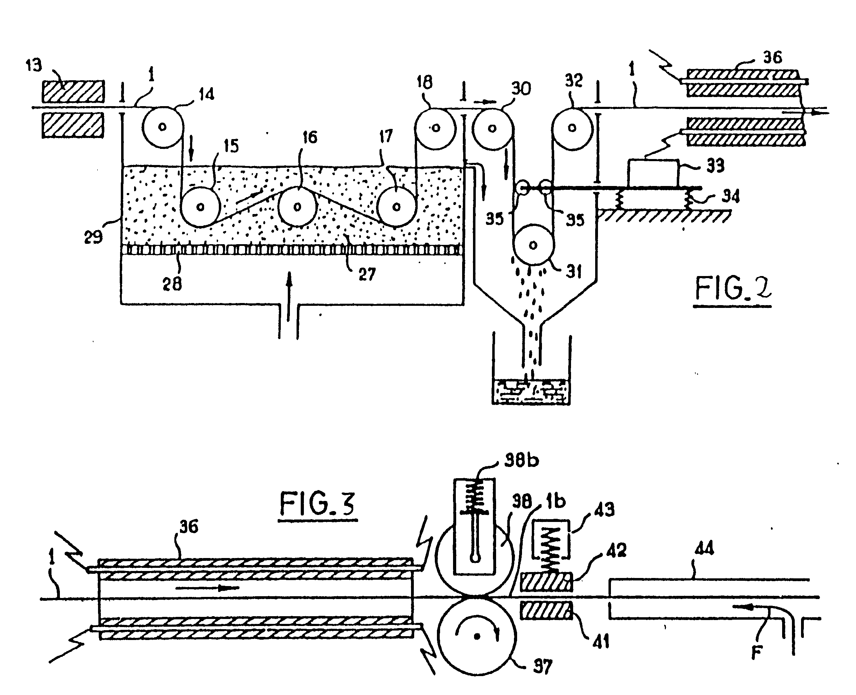

Résine en suspension dense dans l'air ou un gaz neutre (voir Fig. 2)

L'invention consiste à mettre les particules en suspension dense dans l'air ou un gaz neutre, le passage de la nappe dans le bain de résine se faisant comme suit:

La nappe 1 traitée et séchée pénètre par le rouleau 14 dans la masse des particules de résine 27, fluidifiée par un courant d'air ou de gaz neutre passant à travers une paroi poreuse 28 ménagée au fond d'un bac 29 qui contient la masse de résine 27.

Les particules sensiblement sphéroïdales de résine 27 sont forcés mécaniquement à travers les fibres par pressage sur la paroi des rouleaux 15, 16 et 17, ce qui a pour effet d'emprisonner des particules entre toutes les fibres et d'induire par frottement des charges électrostatiques naturelles qui les maintiennent en surface.

L'excès de particules ainsi fixées est éliminé par une agitation de la nappe 1 qui est sortie du bac 29 par le rouleau 18, puis tendue entre des rouleaux 30, 31 et 32.

Cette agitation est effectuée à fréquence et amplitude réglables par le vibreur 33, monté sur silentblocs 34 entraînant des barrettes 35 qui transmettent la vibration à la nappe.

La quantité de particules éliminée est fonction de l'amplitude et de la fréquence de cette agitation.

Le bain de particules 27 est alimenté en continu par une trémie, non représentée, et son niveau est maintenu constant par une jauge électronique qui commande l'alimentation en résine à partir de la trémie.

L'installation est complétée par des dispositifs connus de dessication et déshuilage de l'air, ainsi que par un préchauffage à 50°C environ, de façon à éliminer toute l'humidité de la résine.

La température de préchauffage peut être augmentée jusqu'à une température légèrement inférieure à celle de fusion de la résine en employant un gaz neutre en circuit fermé pour éviter l'oxydation de la résine.

C) Chauffage et fusion (voir Fig. 3)

A la sortie du module d'imprégnation et dosage la nappe 1 de fibres comprenant l'exacte quantité de particules de résine pour le taux de fibres de verre voulu passe dans un four 36 a rayonnement infrarouge de longueur d'onde appropriée à la résine et de longueur adaptée à la vitesse recherchée.

La température de la nappe 1 est relevée en différents points et régulée par asservissement de la température du four 1 au moyen d'un dispositif électronique.

Le rendement du chauffage est d'autant meilleur que l'on maintient la nappe étalée en surface pendant tout le passage dans les fours.

Pour éviter des fusions prématurées en surface, les températures sont réglées de façon à n'atteindre la température de fusion que dans la dernière partie du four 36.

Les fibres étant situées au coeur de la nappe 1, il y a intérêt à les préchauffer avant imprégnation à une température légèrement inférieure à celle de fusion de la résine, ce qui permet d'augmenter la vitesse de production ainsi que l'adhérence fibre-résine.

Ce préchauffage des fibres peut être allié, pour un meilleur rendement, à un préchauffage poussé de la résine, comme indiqué ci-dessus, mais il y a lieu alors de travailler dans une atmosphère non oxydante pour éviter la détérioration de la résine.

Dans le cas d'utilisation de fibres conductrices, comme le carbone, on peut employer avec intérêt un système de chauffage par effet Joule pour assurer ce préchauffage des fibres. Si les fibres ne sont pas conductrices comme le verre, le préchauffage est réalisé soit par infra-rouge, soit par contact sur des rouleaux chauffés, soit par micro-ondes, soit par une combinaison de ces moyens.

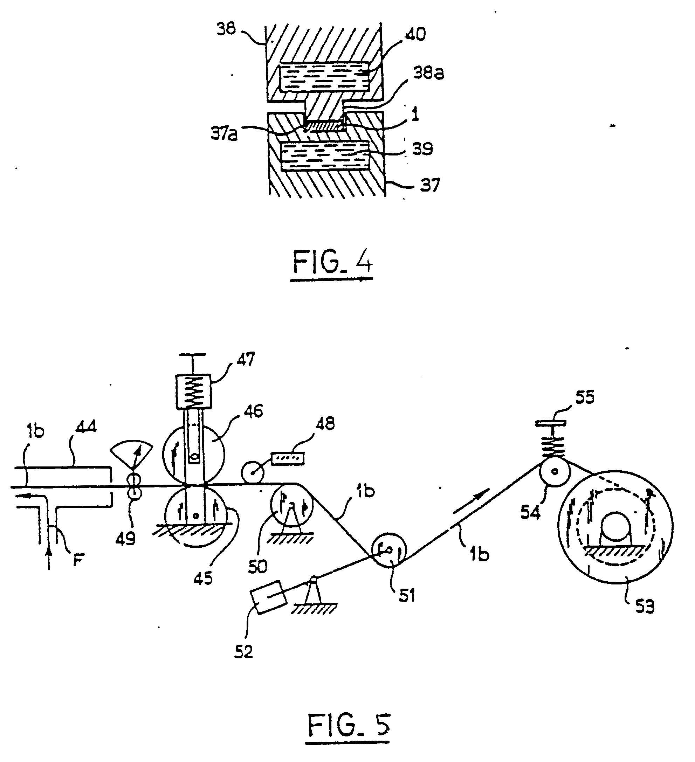

D) Calibrage et refroidissement (Fig. 3 et 4)

Pour des raisons de rendement des moyens de chauffage et fusion, la nappe 1 est étalée au maximum dans le four 36. Il y a donc lieu de la concentrer dès la sortie du four 36 pour lui donner le profil désiré avant qu'elle ne se soit refroidie.

Cette concentration des fibres doit se faire sans modifier leur parallélisme et sans emprisonnement d'air ou de gaz.

Le procédé adopté consiste à rassembler les fibres imprégnées 1 dans la gorge 37a d'un cylindre rotatif 37, de largeur égale à celle du profilé à obtenir. Un deuxième cylindre 38 comportant une saillie annulaire 38a ajustée à la gorge 37a du cylindre 37 et appuyée par un ressort 38b ou un vérin réglable sur le cylindre 37, vient comprimer les fibres enduites de résine 1 par un laminage continu qui évacue l'air à l'amont et calibre la section du profilé avec précision.

Pour éviter l'adhérence de la résine sur les parois des cylindres 37, 38, ceux-ci sont refroidis par une circulation d'eau 39, 40, régulée par passage dans un échangeur non représenté.

Ce dispositif est complété à l'aval par un lisseur statique comprenant une base fixe 41 et un élément mobile 42 appuyé par un vérin 43 sur le profilé 1b. Les éléments 41 et 42 ont le même profil que les cylindres 37, 38 et sont également refroidis par une circulation d'eau à température réglable.

Le rôle de ce lisseur 41, 42 est double. D'une part, il donne un aspect de surface lisse au profilé 1b, d'autre part, il fait chuter la température de la résine en dessous du point de fusion pendant le calibrage pour éviter un rétrécissement du profilé 1b sous l'effet de la traction exercé par le module suivant.

Ce refroidissement est complété par passage dans un tunnel 44 parcouru par un courant d'air froid à contresens (voir flèche F).

D'autres moyens, tels que la pulvérisation d'eau ou le passage du profilé 1b dans un bac à eau peuvent être utilisés.

E) Tirage et bobinage (voir Fig. 5)

A la sortie du tunnel 44 de refroidissement, le profilé 1b est tiré par un jeu de poulies 45 et 46. La poulie 46 est mobile et appuyée sur la poulie 45 par un ressort ou vérin 47 pour assurer l'adhérence sur le profilé. Cette adhérence est améliorée par un garnissage en élastomère des poulies 45, 46. Un compteur linéaire 48 mesure la longueur de profilé 1b produite et un comparateur 49, disposé en amont des poulies 45, 46, mesure en permanence l'épaisseur du profilé, en permettant ainsi de réagir sur le système de dosage de la résine décrit dans l'étape B afin d'ajuster cette épaisseur.

La vitesse de défilement du profilé 1b est choisie par l'opérateur en fonction des produits de constitution du profilé et de sa section. La tension de la nappe 1 est indépendante de cette vitesse et maintenue à la valeur choisie grâce au dispositif décrit dans l'étape A.

Le stokage du profilé 1b sur une bobine 53 est réalise de façon classique par un ensemble comprenant une poulie fixe 50, un balancier à tension réglable constitué d'une poulie 51 et d'un contrepoids 52. Ce balancier commande un potentiomètre agissant sur la vitesse de rotation de la bobine 53.

Une poulie 54, munie d'un frein à patin réglable 55, donne la tension finale et assure, par un système à vis sans fin (non représenté), le trancanage du profilé 1b sur la largeur de la bobine 53 qui est entraînée par un moteur à courant continu à vitesse variable commandée comme dit plus haut par le balancier 51, 52, ce qui permet d'absorber les variations dues à l'évolution du diamètre d'enroulement au cours de remplissage.

Les profilés obtenus à partir de l'installation décrite ci-dessus sont principalement destinés à fretter des tubes de toute nature ou réservoir pour en augmenter la pression de service (brevet français FR—A—2491044 du 26.9.1980 au nom de SPIE-BATIGNOLLES).

Les fibres utilisables comprennent, outre les fibres de verre E ou R ou S, les fibres de carbone, graphite, kevlar, polyamide aromatique, bore, amiante, carbure de silicium et en général toute fibre continue ayant un point de ramollissement supérieur à la température de fusion de la résine.

Les résines employées comprennent toutes les résines thermoplastiques pouvant être produites en particules fines. La dimension optimale des particules est fonction, pour un profilé donné, du diamètre des fibres et du rapport section résine à section fibres que l'on désire obtenir.

Outre les applications de ce profilé pour le frettage des corps cylindriques, il est possible d'envisager:

– la fabrication de tubes par bobinage sur un mandrin ou sur une membrane inférieure rigide,

– la constitution de nappes souples de profilés côte à côte, les nappes étant ensuite empilées en croisant le sens des profilés et solidarisées par fusion entre des plateaux de presse pour réaliser des panneaux rigides de forme complexe (non plane),

– la constitution de tresses de profilés étroits solidarisés ensuite par fusion dans des moules ou des filières chauffées.

– la réalisation de profilés de groose section par assemblage dans une filière chauffée de plusieurs profilés unitaires.

– la fabrication de pièces moulées par extrusion ou injection à partir de ces profilés coupés en petites longueurs.

On donne ci-après un exemple numérique illustrant le procédé conforme à l'invention.

Produits de départ:

Fibres de verre E de 24 microns de diamétre en deux bobines de 2400 tex obtenues par bobinage direct—ensimage polyvalent pour thermodurcissables. Résine polyamide 6 en poudre de granulométrie comprise entre 5 et 25 microns, la moyenne étant comprise entre 12 et 17 microns, additionnée de noir de carbone à raison de 5% pour l'obtention d'un produit résistant aux UV.

Réglages:

Tension de la nappe 1 réglée à : 125 g
Vitesse de défilement de la nappe: 20m/minute
Température du verre après le traitement époxy-phénolique: 120°C
Préchauffage de la résine: 45°C
Température du profilé à la sortie des fours: 240—250°C
Charge du conformateur dynamique (rouleaux 37, 38): 4800 g
Charge du conformateur statique 41, 42:2200 g
Température des conformateurs (eau de refroidissement):

dynamique: 80°C

statique: 60°C

Le profilé 1*b* obtenu avait une largeur de 7,5 mm pour une épaisseur comprise entre 0,50 et 0,55 mm et une masse de 6,9 g/ml en moyenne pour 4,8 g/ml de verre, soit un taux de 70%. Les essais de traction effectués dans le sens de la longueur des échantillons ont fourni des résistances comprises entre 110 et 115 hb ramenées à la section 7,5 x 0,5 mm.

Dans l'installation, la succession des différents modules est essentielle dans la production d'un profilé de résine renforcée de fibres unidirectionnelles présentant une section parfaitement calibrée en largeur et des propriétés mécaniques remarquables en raison du taux élevé de fibres et de l'homogénéité de leur répartition dans la section.

## Revendications

1. Procédé de fabrication de profilés minces constitués de fibres continues unidirectionnelles et non torsadées noyées dans une résine thermoplastique, selon lequel on trempe une nappe (1) de fibres parallèles et équitendues dans un bain (27) de particules de résine contenues dans un bac (29) et en suspension dense dans l'air ou dans un gaz neutre, on fait passer la nappe (1) sur des rouleaux (15, 16, 17) noyés dans le bain de particules de résine, on exerce sur la nappe (1) de fibres passant sur les rouleaux (15, 16, 17) une tension qui est réglée de façon que les particules de résine prises entre les rouleaux et la nappe puissent pénétrer au sein de la nappe, en écartant les fibres les unes des autres, et être emprisonnées dans cette nappe après passage de celle-ci sur les rouleaux, on élimine le surplus de résine pour obtenir le taux désiré de résine par rapport aux fibres, on chauffe la nappe chargée de particules au-delà du point de fusion de la résine après sa sortie du bain de particules de résine, on conforme la nappe au profil désiré, et on refroidit le profilé obtenu, caractérisé en ce que pour éliminer le surplus de résine et obtenir le taux désiré de résine par rapport aux fibres ainsi qu'une répartition uniforme de particules de résine dans la nappe de fibres, après la sortie de cette nappe du bac (29) on agite cette nappe au moyen d'un vibreur (33) en contact avec la nappe par des barrettes (35) et permettant de régler la fréquence et l'amplitude des vibrations transmises aux fibres de la nappe.

2. Procédé selon la revendication 1, caractérisé en ce qu'après fusion de la résine, on conforme la nappe chargée de résine fondue par laminage entre deux cylindres refroidis (37, 38).

3. Procédé selon l'une des revendications 1 ou 2, caractérisé en ce que les particules de résine sont sensiblement sphéroïdales.

4. Installation de fabrication de profilés minces constitués de fibres continues unidirectionnelles et non torsadées, noyées dans une résine thermoplastique, comportant des moyens pour tremper une nappe (1) de fibres parallèles et équitendues dans un bain (26, 27) de particules de résine contenues dans un bac (29) et en suspension dense dans l'air ou dans un gaz neutre, des moyens pour faire passer la nappe (1) sur des rouleaux (15, 16, 17) noyés dans le bain de particules de résine, des moyens pour exercer sur la nappe (1) de fibres passant sur les rouleaux (15, 16, 17) noyés dans la résine une tension qui est réglée de façon que les particules de résine prises entre les rouleaux et la nappe puissent pénétrer au sein de la nappe en écartant les fibres les unes des autres, et être emprisonnées dans cette nappe après passage de celle-ci sur les rouleaux, des moyens pour éliminer le surplus de résine pour obtenir le taux désiré de résine par rapport aux fibres, des moyens pour chauffer, après sa sortie du bain de particules de résine, la nappe chargée de particules au-delà du point de fusion de la résine, et des moyens pour conformer la nappe au profil désiré et refroidir le profilé obtenu, caractérisée en ce que les moyens pour éliminer le surplus de particules de résine dans la nappe comportent après la sortie de celle-ci du bac (29) un vibreur (33) en contact avec la nappe par des barrettes (35) et permettant de régler la fréquence et l'amplitude des vibrations transmises aux fibres de la nappe.

5. Installation selon la revendication 4, caractérisée en ce qu'elle comprend en outre des moyens pour traiter la surface des fibres de la nappe en vue d'améliorer l'adhérence de la résine à ces fibres.

6. Installation selon la revendication 4, caractérisée en ce que les moyens pour conformer la nappe au profil désiré comprennent deux cylindres (37, 38) refroidis en appui sur la nappe, l'un (37) de ces cylindres présentant une gorge annulaire (37 a) de section adaptée à celle du profilé ce que l'on veut obtenir.

7. Installation selon l'une des revendication 4 à 6, caractérisé en ce que les moyens pour conformer la nappe sont suivis par des moyens (44) pour refroidir le profilé formé (1b) jusqu'à la température ambiante, des moyens (53) de tirage du profilé à vitesse variable indépendante de la tension de la nappe, et des moyens de bobinage et trancanage sous tension constante du profilé obtenu.

8. Installation selon l'une des revendications 4 à 7, caractérisée en ce que les moyens pour conformer la nappe au profilé désiré sont suivis par des moyens (42, 43) pour lisser et refroidir complémentairement la surface du profilé à pression et température réglables.

## Patentansprüche

1. Verfahren zur Herstellung von dünnen Profilteilen aus durchgehend in einer Richtung verlaufenden unverdrillten Fasern, die in einem thermoplastischen Harz eingebettet sind, bei welchem Verfahren eine Bahn (1) aus parallelen und unter gleicher Spannung stehenden Fasern in ein Bad (27) aus Harzteilchen eingetaucht wird, die in einem Behälter (29) enthalten sind und sich in dichter Suspension in der Luft oder in einem Neutralgas befinden, die Bahn (1) über in dem Bad aus Harzteilchen eingebettete Walzen (15,16,17) geführt wird, auf die über die in dem Harz eingebetteten Walzen (15,16,17) laufende Bahn (1) aus Fasern eine Spannung ausgeübt wird, die so eingestellt wird, daß die zwischen den Walzen und der Bahn erfaßten Harzteilchen in das Innere der Bahn eindringen können, wobei die Fasern voneinander beabstandet werden, und in dieser Bahn nach deren Bewegung über die Walzen festgehalten sind, des Überschuß and Harz entfernt wird, um den gewünschten Harzanteil in bezug auf die Fasern zu erhalten, die mit Teilchen beladene Bahn nach ihrem Austritt aus dem Bad aus Harzteilchen über den Schmelzpunkt des Harzes hinaus erhitzt wird, die Bahn zu dem gewünschten Profil geformt wird und der erhaltene Profilteil gekühlt wird, dadurch gekennzeichnet, daß zur Entfernung des Harzüberschusses und zur Erzielung, sowohl des gewünschten Harzanteils in bezug auf die Fasern als auch einer gleichmäßigen Harzteilchenverteilung in der Bahn aus Fasern nach dem Austritt dieser Bahn aus dem Behälter (29) diese Bahn mit Hilfe eines mit der Bahn über Stäbe (35) in Kontakt stehenden Rüttlers (33) gerüttelt wird, der erlaubt, die Frequenz und die Amplitude der auf die Fasern der Bahn übertragenen Vibrationen einzustellen.

2. Verfahren nach Anspruch 1, dadurch gekennzeichnet, daß nach dem Schmelzen des Harzes die mit geschmolzenem Harz beladene Bahn durch Walzen zwischen zwei gekühlten Zylindern (37,38) in Form gebracht wird.

3. Verfahren nach Anspruch 1 oder 2, dadurch gekennzeichnet, daß die Harzteilchen im wesentlichen sphäroidisch sind.

4. Anlage zur Herstellung von dünnen Profilteilen aus durchgehend in einer Richtung verlaufenden unverdrillten Fasern, die in einem thermoplastischen Harz eingebettet sind, mit Mitteln zum Eintauchen einer Bahn (1) aus parallelen und unter gleicher Spannung stehenden Fasern in ein Bad (26,27) aus Harzteilchen, die in einem Behälter (29) enthalten sind und sich in dichter Suspension in der Luft oder in einem Neutralgas befinden, Mitteln zum Führen der Bahn (1) über in dem Bad aus Harzteilchen eingebettete Walsen (15,16,17), Mitteln zum Ausüben einer Spannung auf die über die in dem Hartz eingebetteten Walzen (15,16,17) laufende Bahn (1) aus Fasern, welche Spannung so eingestellt ist, daß die zwischen den Walzen und der Bahn erfaßten Harzteilchen in das Innere der Bahn eindringen können, wobei die Fasern voneinander beabstandet werden, und in dieser Bahn nach deren Bewegung über die Walzen festgehalten sind, Mitteln zum Entfernen des Überschusses an Harz, um den gewünschten Harzanteil in bezug auf die Fasern zu erhalten, Mitteln zum Erhitzen der mit Teilchen beladenen Bahn nach ihrem Austritt aus dem Bad aus Harzteilchen über den Schmelzpunkt des Harzes hinaus und Mitteln zum Formen der Bahn zu dem gewünschten Profil und zum Kühlen des erhaltenen Profilteiles, dadurch gekennzeichnet, daß die Mittel zum Entfernen des Überschusses an Harzteilchen in der Bahn einen hinter dem Austritt letzterer aus dem Behälter (29) vorgesehenen, mit der Bahn über Stäbe (35) in Kontakt stehenden Rüttler (33) umfaßt, der erlaubt, die Frequenz und die Amplitude der auf die Fasern der Bahn übertragenen Vibrationen einzustellen.

5. Anlage nach Anspruch 4, dadurch gekennzeichnet, daß sie weiters Mittel zum Behandeln der Oberfläche der Fasern der Bahn im Hinblick auf eine Verbesserung der Haftfähigkeit des Harzes auf den Fasern umfaßt.

6. Anlage nach Anspruch 4, dadurch gekennzeichnet, daß die Mittel zum Formen der Bahn zu dem gewünschten Profil zwei Zylinder (37,38) enthalten, die gekühlt und gegen die Bahn angedrück sind, wobei einer (37) dieser Zylinder eine Ringnut (37a) mit einem Querschnitt aufweist, der an den des Profilteils, der erhalten werden soll, angepaßt ist.

7. Anlage nach einem der Ansprüche 4 bis 6, dadurch gekennzeichnet, daß auf die Mittel zum Formen der Bahn Mittel (44) zum Abkühlen des gebildeten Profilteils (1b) bis auf die Umgebungstemperatur, Mittel (53) zum Ziehen des Profilteils mit variabler Geschwindigkeit, die unabhängig von der Spannung der Bahn ist, und Mittel zum Aufwickeln des erhaltenen Profilteils Windung neben Windung und unter konstanter Spannung folgen.

8. Anlage nach einem der Ansprüche 4 bis 7, dadurch gekennzeichnet, daß die Mittel zum Formen der Bahn zu dem gewünschten Profil gefolgt sind von Mitteln (42,43) zum Glätten und komplementären Abkühlen der Oberfläche des Profilteils unter einstellbarem Druck und einstellbarer Temperatur.

**Claims**

1. A process for manufacturing thin profiled strips composed of continuous unidirectional and untwisted fibers embedded in a thermoplastic resin, comprising dipping a lap (1) of parallel and equally-taut fibers in a bath (27) of resin particles contained in a tub (29) and in dense suspension in air or neutral gas, feeding the lap over rollers (15, 16, 17) immersed in said bath of resin particles, exerting on the lap of fibers running over said rollers (15, 16, 17) immersed in the resin, a tension such that the resin particles trapped between the rollers and the lap can penetrate into the lap, by pushing the fibers apart from each other and be caught in the lap once the lap has passed around the rollers, eliminating the excess of resin to obtain the desired ratio of resin to fibers, heating the lap loaded with resin particles over the melting point of the resin, after its leaving from the bath of resin particles, forming the lap to the desired profile and cooling the obtained profiled strip, characterized in that for eliminating the resin excess and obtaining the desired ratio of resin to fibers as well as an uniform distribution of resin particles within the lap of fibers, after leaving of the lap from the tub (29), the lap is shacked by the means of a vibrator (33) in contact with the lap by bars (35) permitting to adjust the frequency and the amplitude of the vibrations transmitted to the fibers of the lap.

2. A process according to claim 1, characterized in that after melting of the resin, the lap loaded with melted resin is formed by pinch passing it between two cooled cylinders (37, 38).

3. A process according to any of claims 1 or 2, characterized in that the resin particles are substantially spheroïdal.

4. An installation for manufacturing thin profiled strips composed of continuous unidirectional and untwisted fibers embedded in a thermoplastic resin, comprising means for dipping a lap (1) of parallel and equally-taut fibers in a bath (26) of resin particles contained in a tub (29) and in dense suspension in the air or neutral gas, means for feeding the lap over rollers (15, 16, 17) immersed in said bath of resin particles, means for exerting on the lap of fibers running over said rollers (15, 16, 17) immersed in the resin, a tension such that the resin particles trapped between the rollers and the lap can penetrate into the lap, by pushing the fibers apart from each other and be caught in the lap once the lap has passed around the rollers, means for eliminating the excess of resin particles to obtain the desired ratio of resin to fiber, means for heating after its leaving from the bath of resin the lap loaded with particles to melt said resin particles, and means for forming the lap to the desired profile and for cooling the obtained profiled strip, characterized in that the means for eliminating the excess of resin particles in the lap comprise after its leaving from the tub (29) a vibrator (33) in contact with the lap by bars (35) and permitting to adjust the frequency and the amplitude of the vibrations transmitted to the fibers of the lap.

5. An installation according to claim 4, characterized in that it further comprises means for treating the surface of the fibers in order to improve the adherence of the resin to the fibers.

6. An installation in accordance with claim 4, characterized in that the means for forming the lap to the desired profile comprise two cooled cylinders (37, 38) in contact with the lap, one (37) of said cylinders including an annular groove (37a) whose cross-section matches the profile sought.

7. An installation in accordance with any of claims 4 to 6, characterized in that the means for forming the lap are followed by means (44) for cooling the profiled strip (1b) at variable speed independent of the lap tension and means for coiling and distributing the profiled section obtained under constant tension.

8. An installation in accordance with any of claims 4 to 7, characterized in that the means for forming the lap to the desired profile are followed by means (42, 43) for smoothing and cooling complementarily the surface of the profiled section at adjustable pressure and temperature values.

FIG.1

FIG. 2

FIG. 3

EP 0 093 748 B2

FIG. 4

FIG. 5